# EUROPEAN PATENT APPLICATION

(11) **EP 2 381 409 A2**
(43) Date of publication of application: **26.10.2011**
(21) Application number: 11158092.4
(22) Date of filing: 14.03.2011
(51) Int. Cl.: G06Q 30/00, G07F 7/08, G06Q 20/00, G07G 1/00, G07G 1/14

(54) **System for self-service shopping and trolley thereof**

(30) Priority: 21.04.2010 LT 2010033
(71) Applicant: Baublys, Edvinas, 67342 Veisiejai, Lazdiju r. (LT)
(72) Inventor: Baublys, Edvinas, 67342 Veisiejai, Lazdiju r. (LT)
(74) Representative: Draugeliene, Virgina Adolfina

(57) **Abstract**

The presented invention relates to self-service shopping system and is designed for shopping centers, to modernize the shopping process and the payment for the goods, as well as to increase the convenience of shopping. The self-service shopping system, comprises the main server, at least one computerized shopping cart for the goods with an RFID reader, designed for scanning the information from the RFID codes of the goods loaded on the cart, and to display this information on the computer monitor. In addition, the shopping cart has a magnetic and/or smart card reader. The system also comprises a stationary self-service terminal with a payment device and at least one entrance gate and at least one exit gate. In order to accelerate payment for the goods, magnetic and/or smart card reader, arranged in the cart is designed and adapted to read payment cards and to carry out payment transactions. Each shopping cart has an integrated individual RFID tag, while the entrance gate has an RFID reader to activate the shopping cart. The stationary self-service terminal comprises a device for paying in cash without unloading the goods from the cart, while the exit gate is equipped with an RFID reader, which scans the cart's RFID code and the RFID codes of the items within the cart, and with the help of the communication link with the said server, performs the comparison between the prices of all the goods present in the cart with the amount paid, and the result of the comparison is shown on the display.

## Description

The present invention relates to self-service shopping system and is designed for shopping centers, to modernize the shopping process and the payment for the goods, as well as to increase the convenience of shopping. The invention comprises the sorting, entry and comparison of the products' data, stored on different media.

Currently, the service quality is highly important for the retail trade. It determines not only the retail chain's reputation, but also the turnover and profit. As the society enters the age of information technology, the self-service shopping should not be a complicated process for the customers at the shopping centers. Despite the fact that information technology has made significant advances, today's shopping process at the supermarkets has remained almost unchanged. Long lines form at the cash registers, poor workers keep scanning the goods. Mistakes caused by the human factor, theft, etc. However, even the modem self-checkout registers do not reduce the long lines. Customers are still forced to wait, because without having the skills the purchase is even slower than the usual purchase at the traditional cash register. BAR-code scanning also requires a considerable time.

Therefore, the traditional shopping process is not convenient. The goods, once placed in a shopping cart or a basket, must be offloaded at the counter, then scanned, then they are being paid for, and then loaded back. Thus loading of the goods into a shopping cart happens twice. Thus, a considerable amount of time gets wasted on that. Therefore, queuing at the cash registers becomes longer.

Besides, the customer selecting and placing goods into a shopping cart does not know what will be their total price. Knowing the total purchase price, the shopping would be far more convenient, because the consumer could choose the items to match the amount of money he is willing to spend.

Theft of goods is also a great deficiency of the current shopping system. Goods with the bar codes, without being noticed by the security cameras, can easily be taken through the checkout counter, as the BAR-code does not carry any security feature. While the cameras and security personnel are able to detect only a part of the thefts.

Other modem shopping methods have been suggested, operating by wireless and using the RFID (Radio Frequency Identification) technology. However, some of those methods are too complex and require quite a significant shopping center reconstruction, while other methods reduce the waiting lines, but do not eliminate them entirely, and the shopping and management of the self-service equipment are not convenient.

US 2005/0230472 A 1 describes the system and method for remote shopping. According to this system the shop is divided into two rooms, one of which contains product samples, the other one contains the goods that will be bought by the buyer. In this case, the system offers to optimize the size of the room, where customers move. Thus the customers with the mobile indicator, operating on the wireless network, will be able to scan only the sample goods, workers in the warehouse will load the goods into a cart and will leave it at the exit point. According to the invention a lot of commercial space is saved and customers are not required to do a lot of walking. However many customers want to choose the goods themselves, such as fruits, vegetables and so on from a larger range of goods. In this case, they can not see what goods they are buying. In addition, the reduction of the retail space and the increasing warehouse requires a significant reconstruction of the existing shopping centers. Many more workers are required in the warehouse to load the goods for customers. With a large influx of customers, one would have to wait in queues until the goods are ready to be taken out.

U.S. Patent No. 4 071 740 describes an automated mobile shopping system. The cart scans the bar codes, but does not scan the RFID tags. The cart itself does not perform the self-service function. The payment for the goods can not be performed on it. Therefore, the shopping process within the shop is not as quick. Besides the cart has no direct wireless communication link with the server.

The closest to the present invention is a shopping system described in U.S. 2008/0238615 A. Known shopping system comprises a supermarket shopping cart designed for advertising. The cart has integrated RFID and bar code scanners. The shopping cart is made both, for products with bar codes and RFID tags. The cart is good, because the customer can see product prices, the map of the retail space and the way to the products on a LCD (liquid crystal) display. Also, the LCD screen displays advertisements. However, the cart is handled through a control panel mounted on a cart handle. The LCD screen is installed at the end of the cart, therefore for the customer it is not convenient to watch video. It is not possible to make a payment for the goods using the cart, and the card reader is for scanning the customer loyalty cards. The shopping system that uses this shopping cart does not sufficiently streamline the shopping process, it does not solve the problem of forming waiting lines.

The invention aims to speed up the shopping process by overcoming the problem of forming waiting lines, as well as to improve the service quality and protect against theft.

The essence of the proposed invention is that the self-service shopping system, comprises a main server, coupled with data bases, which contain information about the goods; at least one cart for the goods, in which are arranged the equipment such as:
- a computer with a monitor and its control device, comprising a communication link with the main server,
- RFID reader, comprising a communication link with the said computer and the main server, for scanning the information about the goods loaded on the cart, based on their RFID tags, and to show this information on the said monitor,
- magnetic and/or smart card reader to read customer loyalty cards;
a stationary self-service terminal with a payment device, comprising a communication link with the main server; at least one entrance gate and at least one exit gate.
The said magnetic and/or smart card reader, which is arranged in the the said cart, is designed and adapted additionally to read payment cards, and has a mutual communications link through the cart's computer with the main server, which is connected to the Internet in order to be able to carry out payment transactions in a shopping cart. Each cart is fitted with an individual RFID tag. The entrance gate has an RFID reader to read cart's RFID tag, which is linked with a bidirectional communication link with the main server, so that it activates the cart based on the cart's RFID tag; the said stationary self-service terminal comprises a device for paying in cash, has a communication link with the equipment arranged in a shopping cart, and has a RFID reader and a special place to park a shopping cart, where the cart's RFID tag gets read and the payment in cash is carried out, without removing the goods from the cart; the said exit gate is equipped with control unit containing a RFID scanner, which scans the cart's RFID code and the RFID codes from the products present in the cart, and via the mutual communication link with server, performs the comparison of the prices of all the goods present in the cart with the paid amount, and displays the result of the comparison on the display.

The magnetic and/or smart card reader present on the cart and aligned with the system, allows customers to pay for the goods directly using the cart, anywhere on the trade floor. The customer only has to leave through the exit control gate. In this case, the supermarket does not need cash registers and employees working with them. There are no queues, because each customer buys the goods individually and pays for them using his cart, therefore there is a possibility to increase customer flows. For the customers, who do not have payment cards, there is provided a stationary self-service terminal with a device for cash payments, there is no need for repeated scanning of goods, it remains only to put cash for the goods, which are in the cart, into the device. After installing such a system in the shopping center, the shopping process is much faster compared to the traditional way of shopping.

In addition, having the goods with RFID tags, ensures greater protection, since the RFID tags also perform the protective role. It will not be possible to take the unpaid goods through the exit control gates, where the repeated scanning of the goods with RFID codes within the shopping cart is performed, and their prices are compared with the amount paid.

Another advantage of the presented system is that within the proposed system there can be installed a monitoring system for tracking real-time turnover. The RFID reader present on the shelves scans the RFID tags of the goods. After removing the product from the shelf, the server shows that the product is no longer present on the shelf. It shows how many products are on shelves and the total number of products within the store. This way the precise number of goods on the retail floor is known. Knowing what products have been purchased and what goods are still on the shelves, the comparison of the number of goods taken from the shelves and the sold goods is performed in the database. Also, such a system makes visible in real-time how many goods have to be placed on which shelves. The server accurately counts all the bought goods, goods present on the shelves and the goods removed from the shelves. In this way, the real-time goods turnover is visible and allows the store to improve service quality as well as to improve protection against theft.

The communication link with the server is a wireless connection.

This simplifies the technical embodiment of the system and provides greater security.

According to another embodiment of this invention, there is a proposed shopping cart for self-service shopping system comprising a computer with the monitor and its control unit, RFID reader for scanning the information about the goods placed in the shopping cart, based on the RFID tags attached to the goods, and for showing the information on a computer monitor, magnetic and/or smart card reader to read customer loyalty cards. The cart is provided with RFID tag for cart identification, while said magnetic and/or smart card reader designed and adapted additionally to read the payment cards and to carry out payment transactions in a shopping cart.

The cart's computer monitor is a touch-sensitive LCD screen, mounted in front of the cart, better on its handle, in a convenient location for the buyer.

The shopping cart may have integrated electronic scales with a communication link with the said computer.

In this case, the goods placed into the shopping cart get weighed, and it is not possible to take them out with damaged or removed RFID tags. There is an opportunity to weigh the bulk products (fruits, vegetables, etc.) immediately in the shopping cart.

The information about the goods loaded into the cart gets read based on their RFID codes and is associated with the weight of the goods, quantity, expiry date, volume, composition, price, the total price of all the goods placed in the cart, etc. The advantage of the cart lies in the fact that its control is simple, the customer does not need to separately scan each product he wants to buy, it is enough to put the item into a shopping cart, where its screen immediately shows the price and other information about that product. By using the touch-sensitive screen the customer can fully take care of the shopping process, select payment method, that is to perform the payment transaction using the cart, anywhere on the shop floor, and then leave through the control gate.

Advantageously, in another embodiment of the invention, there is proposed a shopping method in a self-service shopping system, comprising the following steps: at the entrance gate the customer activates the computerized cart based on its RFID code via the mutual communication link with the server, the customer loads the goods with RFID tags into the cart; the RFID reader present in the cart automatically scans the RFID tags from the goods and shows the information about the goods and their price on the computer's LCD touch-sensitive screen, it also transfers this information via the communications link to the main server, after all the desired goods are loaded into the cart, the customer with the help of the touch-sensitive LCD screen selects the payment method to pay by card or in cash, and based on the selected payment method carries out the payment using the computerized cart by inserting the payment card into the magnetic or smart card reader present in the cart, or goes to the stationary self-service terminal, where carries out the payment in cash; then the customer goes to the control exit gate, where the RFID reader scans the carts RFID code and once again scans the RFID codes from the goods loaded into the cart, while using the mutual communication link with the server makes the comparison of the paid amount and the total price of the goods present in the cart, and displays the results of the comparison on the screen; if the totals under comparison match each other the customer gets the receipt issued by a special device, if the totals do not match -- the signal is sent to the security staff.

The proposed shopping method within the self-service system, accordance to the invention, streamlines the shopping process, solves the queuing problem, improves service quality and provides protection against theft.

The data exchange between the main supermarket server and the mobile device takes place over the wireless link. The information about the scanned products is wirelessly transmitted from the cart to the wireless access points, from there it is transferred to the central server. After completing the payment using the cart, the data from the server goes to the exit points, where, when the buyer leaves with the cart, the comparison is performed on the bought goods with the goods, which at that time are being carried through the exit gate. This way the repeated scanning of goods is performed, which provides greater security.

In the shopping system, three groups of buyers are distinguished: 1) customers who make purchase using a special cart adapted for the procurement system and who perform the payment using smart or magnetic payment cards (credit, debit); 2) customers who make purchases using a special cart and who pay in cash; 3) customers who make purchases using a special shopping basket or without it (further - a shopping basket) and who perform the payment using is smart or magnetic payment cards (credit, debit) or cash.

This system distinguishes between the two main devices, which are used to carry out the shopping process by the three above-mentioned customer groups:
1. mobile self-service terminal (hereinafter - MST);
2. stationary self-service terminal (hereinafter - SST).

The invention is explained in more detail with the help of figures
Fig. 1A conceptual model of the proposed shopping system. The diagram shows the commercial premises and the layout of the shopping equipment on the premises as well as the communication with the server.
Fig. 2 Customer groups. Figure shows customers who use electronic carts and baskets (MST) for their shopping process, who pay in cash and payment cards.
Fig. 3 The shopping process of the first customer group. The figure shows the communication between the devices used for the shopping process through a central server using a wired connection, wireless link and radio frequency identification.
Fig. 4 The shopping process of the second customer group. The figure shows the communication between the devices used for the shopping process through a central server using a wired connection, wireless link and radio frequency identification.
Fig. 5 The shopping process of the third customer group. The figure shows the communication between the devices used for the shopping process through a central server using a wired connection, wireless link and radio frequency identification.
Fig. 6 MST flow chart. It shows the main elements of this terminal.
Fig. 7 The conceptual MST model. The diagram shows the basic layout of the elements of the terminal: a) the view of the terminal from the top; b) the view of the terminal from the side;
Fig. 8 SST flow chart. It shows the main elements of this terminal.
Fig. 9 The conceptual SST model. The diagram shows the layout of the key elements of the terminal.
Fig. 10 Structural diagram showing the flow of the shopping process. The diagram shows the sequence of conditions and actions, and also the relationships between them, required to complete the shopping process. In the diagram, there are three groups of customers distinguished based on the devices used and the method of payment.
Fig. 11 Structural diagram showing the flow of the shopping process of the first customer group. The diagram shows the sequence of conditions and actions, and also the relationships between them, required to complete the shopping process of the first customer group, prior to leaving the shop floor.
Fig. 12 Structural diagram showing the flow of the shopping process of the second customer group. The diagram shows the sequence of conditions and actions, and also the relationships between them, required to complete the shopping process of the first customer group, prior to leaving the shop floor.
Fig. 13 Structural diagram showing the flow of the shopping process of the third customer group. The diagram shows the sequence of conditions and actions, and also the relationships between them, required for completing the shopping process of the third customer group, prior to leaving the shop floor.
Fig. 14 Structural diagram showing the exit through the gate for all three customer groups. The diagram shows the sequence of conditions and actions, and also the relationships between them, required for goods identification at the moment when customers leave the shop floor through the security gate.
Fig. 15 illustrates the comparison of the goods moving with MST through the security gate. There is shown the database table for recording and grouping purchased goods into separate purchases, based on which the purchase receipts are issued.
Fig. 16 illustrates the comparison of the goods passing through the security gate without the MST. There is shown the database table for recording and grouping purchased goods into separate purchases, based on which the purchase receipts are issued.
Fig. 17 illustrates the exit through the security gate and the issue of the receipt.
Fig. 18 shows the conceptual diagram for monitoring the turnover in real-time. It shows RFID readers, which are installed on the shelves of the shop floor and connected to the main server.
Fig. 19 illustrates the identification of the goods on the shelves, by using a wired connection and radio frequency identification.

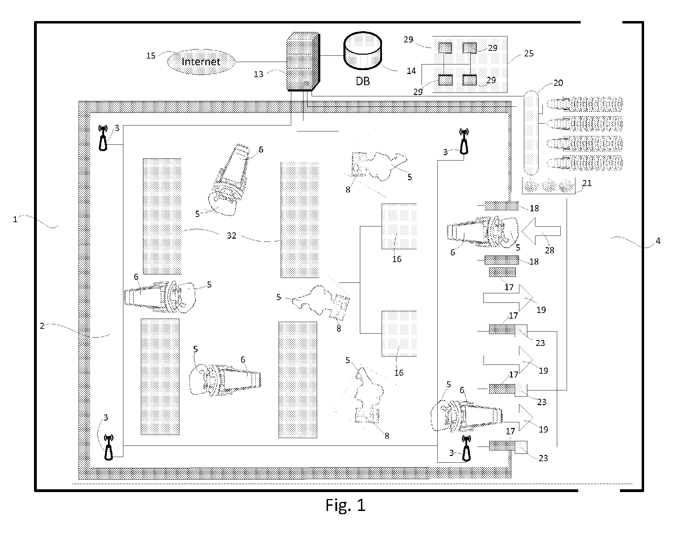

Fig. 1 shows the parts: shopping center 1; retail floor 2; wireless access point 3; store area 4; buyer 5; shopping cart (mobile self-service terminal -MST) 6; shopping basket 8; central server 13; database 14; Internet 15; stationary self-service terminal (SST) 16; exit control gate 17; entrance gate 18; exit from the retail floor 19; MST charging device 20; the parking place for shopping baskets 21; receipt printer 23; security staff room 25; entrance to the retail floor 28; security staff computers 29; shelves for goods 32;

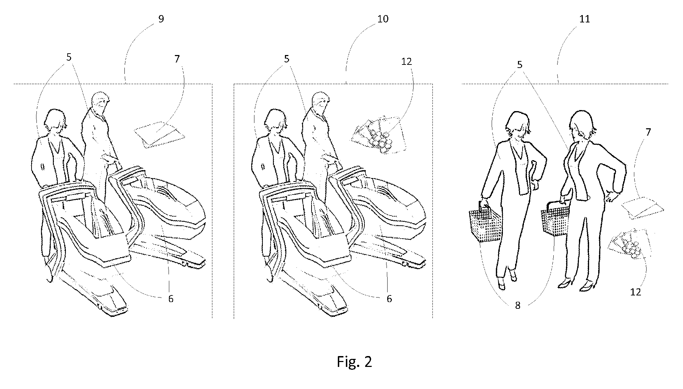

Fig. 2 shows the parts which are not shown in Fig.1 : the first customer group 9; the second customer group 10; the third customer group 11; smart / magnetic payment card 7; cash 12;

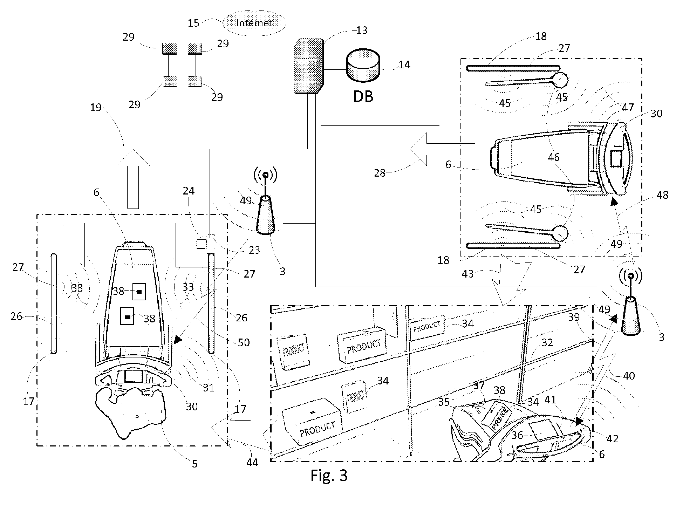

Fig. 3 shows the parts, which are not shown in Fig.Fig. 1-2: purchase receipt 24; sound alarm 26; RFID reader in the exit control gate 27; active RFID tag 30; signal sent from an active RFID tag 31; signal sent by the RFID reader 33; goods 34; RFID reader 35 on a (MST) cart 6; MST LCD touch screen 36; reading RFID tag information 37; RFID tag 38; data sent via wireless connection 39 from the MST to the server using wireless access point; data 40 received via wireless access point from the server to the MST; magnetic card reader 41; smart card reader 42; movement 43 from the entrance gate to the shelves; movement 44 from the shelves to the exit gate; signal sent by the RFID reader 45; automatic entrance gate 46; signal emitted by active RFID tag 47 for communication with the security gates; data 48 sent via wireless connection from the server to the MST using wireless access point; wireless link 49; data 50 sent via wireless connection from the server to the MST using wireless access point;

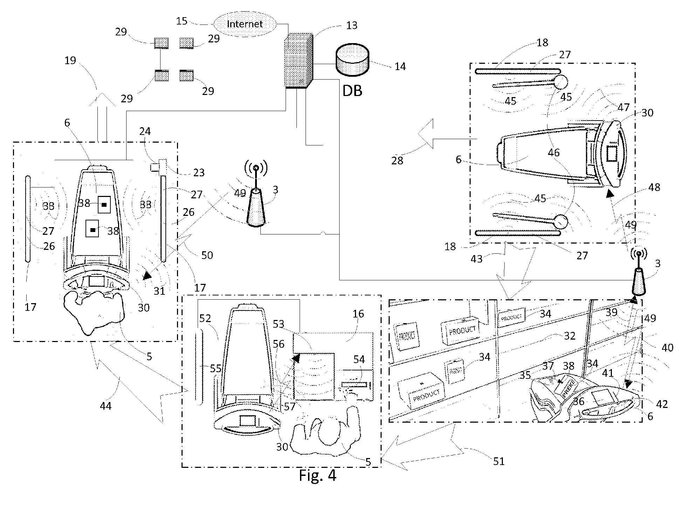

Fig. 4 shows the parts, which are not shown in Fig.Fig. 1-3: movement 51 from the shelves to the SST; place 52 to enter with the MST; SST RFID reader 53; touch-sensitive LCD screen 54; SST security gate 55; data sent via radio frequency 56 from the MST to the SST; signal emitted by the active RFID tag 57 to communicate with the SST;

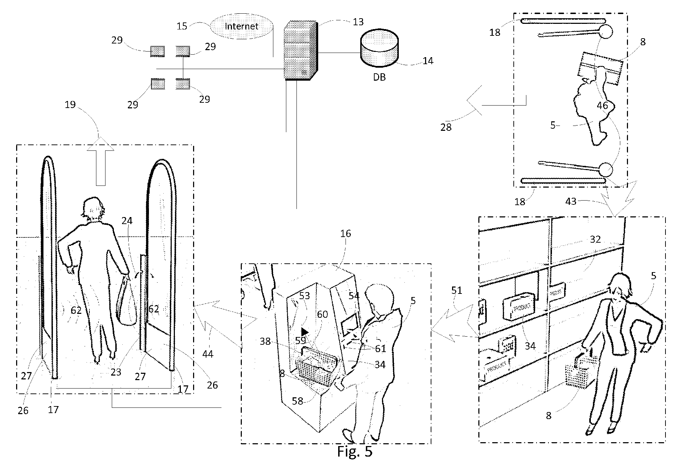

Fig. 5 shows the parts, which are not shown in Fig.Fig. 1-4: A special place 58 in a stationary self-service terminal, to place the shopping basket; the signal 59 sent by the RFID reader, which is in SST; reading of an RFID tag 60; device 61 to insert and to issue cash; the signal 62 sent by the RFID reader, which is at the security gate;

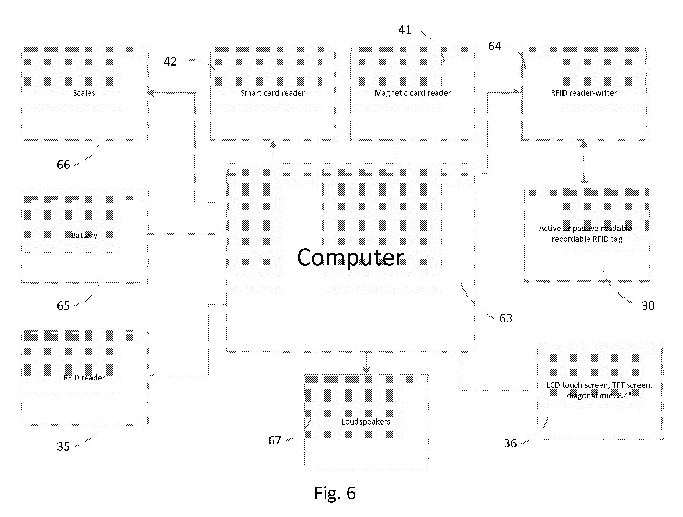

Fig. 6 shows the parts, which are not shown in Fig.Fig. 1-5: Cart's (MST) computer 63; RFID reader - recorder 64; batteries 65; scales 66; MST audio speakers 67;

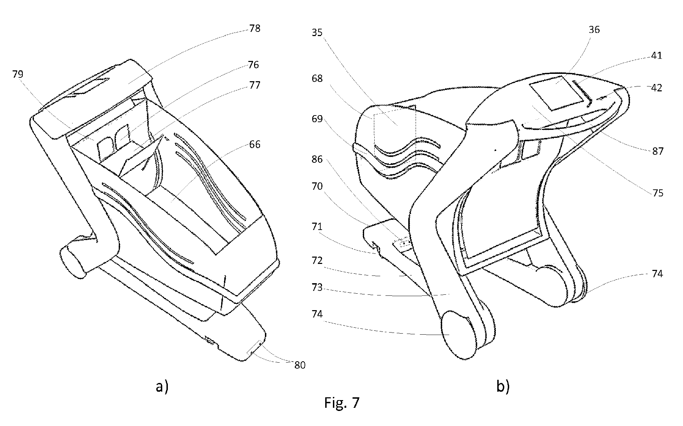

Fig. 7 shows the parts, which are not shown in Fig.Fig. 1-6: bag for the goods 68; rubber band 69; the rear frame 70; front wheels 71; curved lower frame 72; curved side frame 73; rear wheels 74; front frame 75; openings for legs of a seat for children 76; seat for children 77; the upper front frame 78; the opening side of a shopping basket 79; the charging socket 80; the charging plug 86; handle 87;

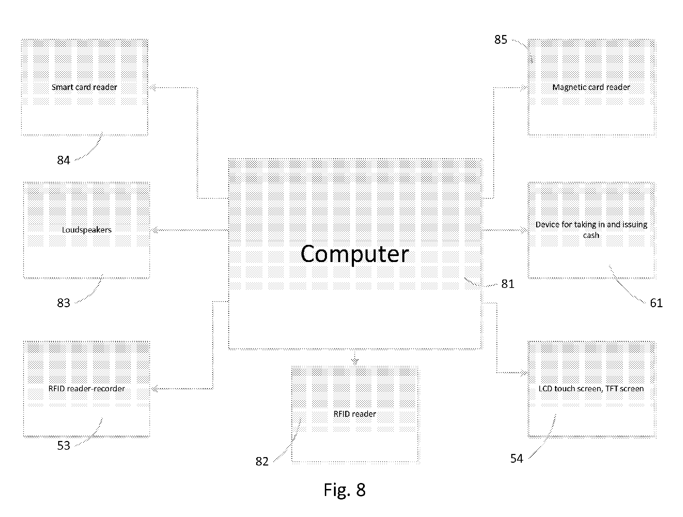

Fig. 8 shows the parts, which are not shown in Fig.Fig. 1-7: SST computer 81; RFID reader 82; SST audio speakers 83; smart payment card reader 84; magnetic payment card reader 85;

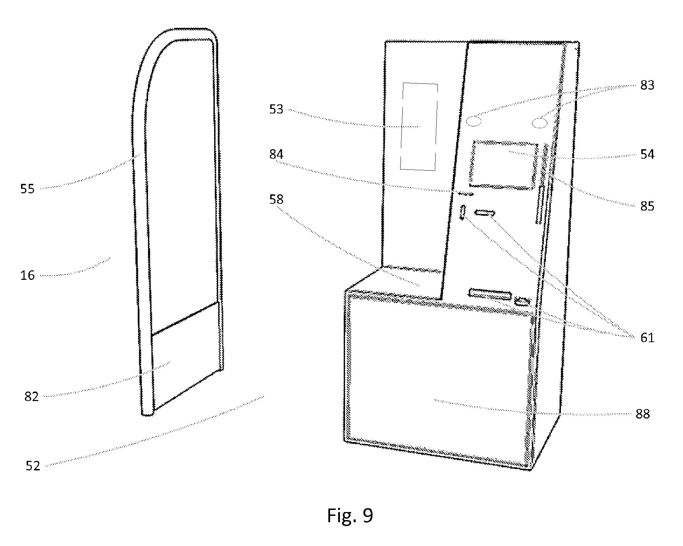

Fig. 9 shows the parts, which are not shown in Fig.Fig. 1-8: SST base 88;

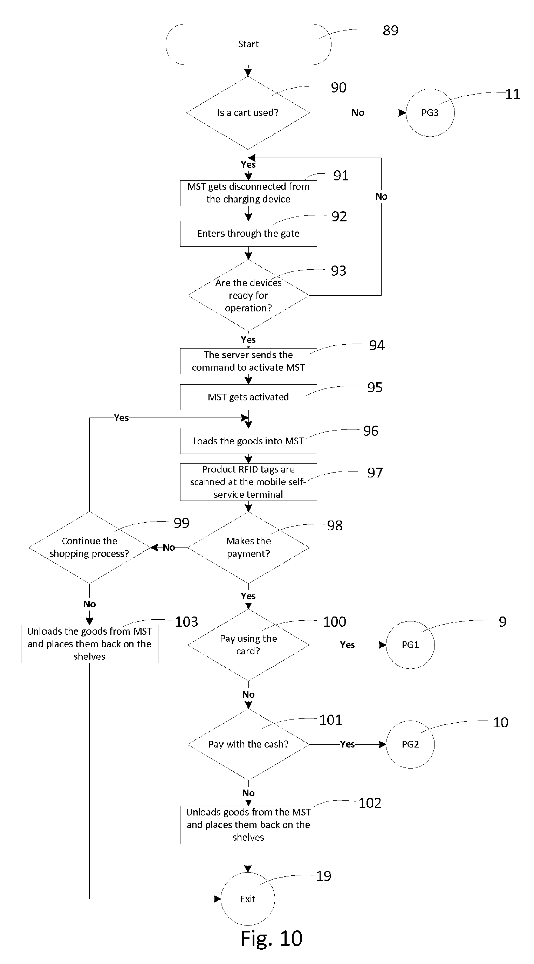

Fig. 10 shows the parts, which are not shown in Fig.Fig. 1-9: Start of the shopping process 89; condition 90: "If one is using the MST"; action 91: "MST gets switched off from the charging device"; action 92: "passes through the gate"; condition 93: "if the device is ready for operation"; action 94: "sends a command to activate MST"; action 95: "activate MST"; action 96: "puts the goods into the MST"; action 97: "RFID tags of the goods are scanned at the mobile self-service terminal"; condition 98: "if one wants to make a payment"; condition 99: "If one wants to continue with the purchase"; condition 100: "If the payment is with the card"; condition 101: "if payment is in cash"; action 102: "removes the goods from MST and places them on the shelves"; action 103: "removes the goods from the MST and places them on the shelves ";

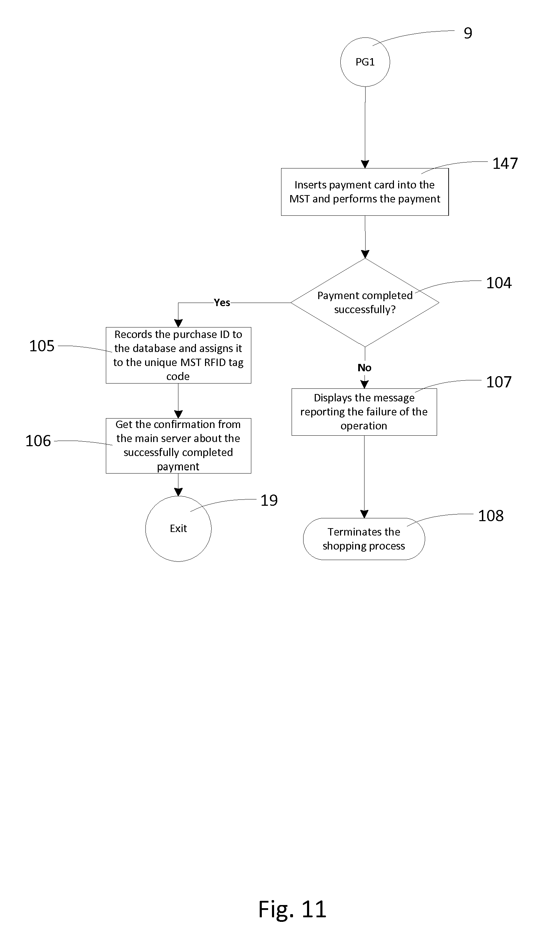

Fig. 11 shows the parts, which are not shown in Fig.Fig. 1-10: condition 104: "If the payment was successful"; action 105: "records the purchase identification code (hereinafter - ID) in the database and assigns it to the unique MST RFID tag code"; action 106; "receives approval from the central server on a successfully performed payment"; action 107: "shows warning about the failure to execute operation"; end 108: "the purchase process is stopped"; action 147: "inserts the payment card into MST and performs the payment";

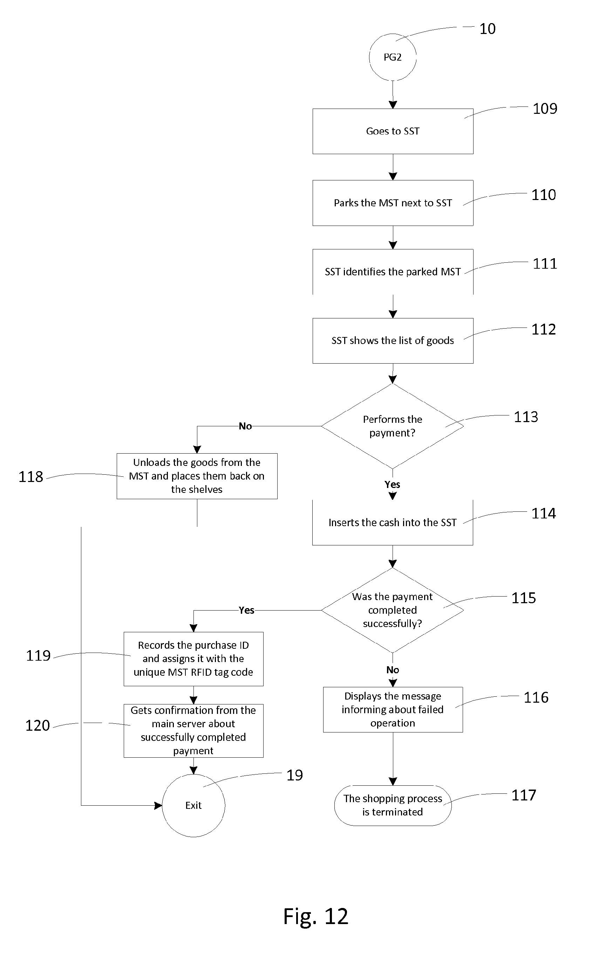

Fig. 12 shows the parts, which are not shown in Fig.Fig. 1-11: action 109 "goes to SST"; action 110: "MST moved next to SST"; action 111: "SST identifies the MST, which was moved next to it"; action 112: "SST shows the list of goods"; condition 113: "if you want to make a payment"; action 114: "puts cash into the SST"; condition 115: "if the payment was successful"; action 116: "shows the message about the failed operation"; end 117: "terminating the shopping process"; action 118: "removes the goods from MST and puts them on the shelves"; action 119: "records the purchase ID to the database and assigns it with the unique MST's RFID tag code"; action 120: "receives approval from the central server on a successful payment";

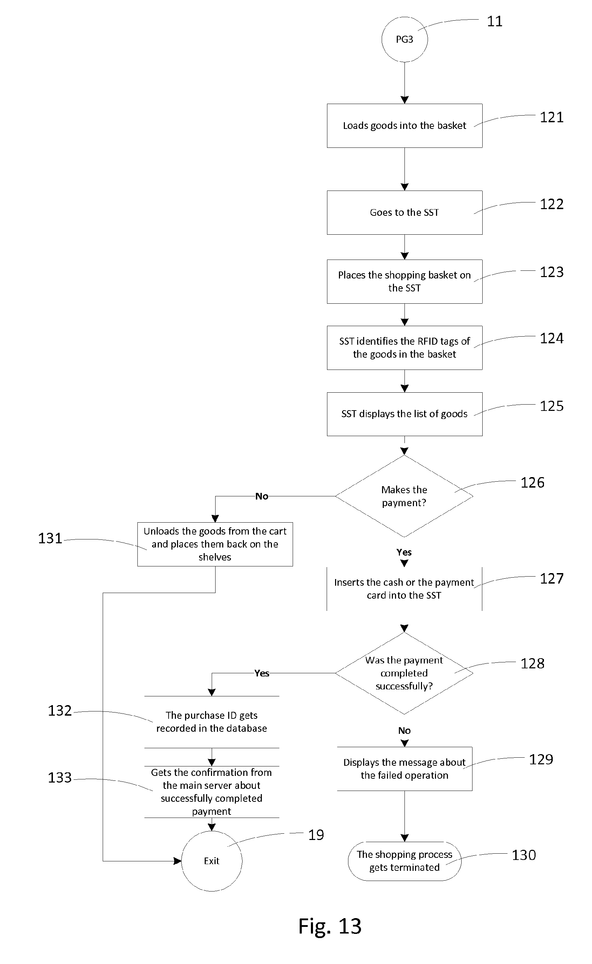

Fig. 13 shows the parts, which are not shown in Fig.Fig. 1-12: action 121 "puts the goods to the basket"; action 122: "goes to SST"; action 123: "places the basket on SST"; action 124: "SST identifies the RFID tags of goods present in the basket"; action 125: "SST displays the list of goods"; condition 126: "if one wants to perform the payment"; action 127: "puts cash or a payment card into the SST"; condition 128: "if the payment was successful"; the end 130: "terminating the purchasing process"; action 131: "removes the goods from the basket and puts them on the shelves"; action 132: "records the purchase ID to the database"; action 133: "receives approval from the central server on a successful payment";

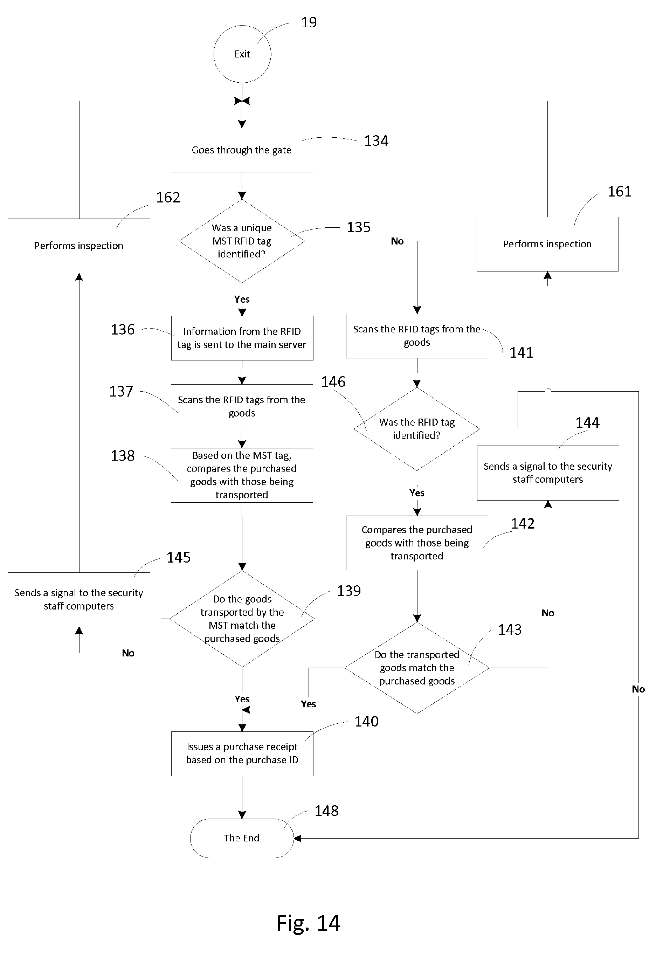

Fig. 14 shows the parts, which are not shown in Fig.Fig. 1-13: action 134: "goes through the gate"; condition 135: "if the RFID tag was identified in MST"; action 136: "sends RFID tag's information to the central server"; action 137: "scans the RFID tags of the goods"; action 138: "MST tag compares the purchased goods with the goods being transported based on their tags"; condition 139: "if the goods being transported with MST match the purchased goods"; action 140: "issues a receipt based on the purchase ID"; action 141: "scans the RFID tags on the goods"; action 142: "compares the purchased goods with the goods being transported"; condition 143: "if the goods being transported match the purchased goods"; action 144: "sends a signal to security computers"; action 145: "sends a signal to security computers"; condition 146: "if the product's RFID tag is identified"; the end 148: "the purchase process is being completed"; action 161: "performs inspection"; action 162: "performs inspection";

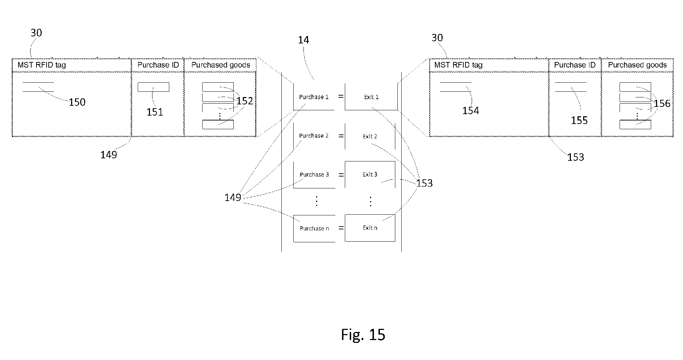

Fig. 15 shows the parts, which are not shown in Fig.Fig. 1-14: purchase group 149, created after making the payment; the unique MST RFID tag code 150 in the table after the payment; the purchase ID 151 in the table after the payment; the identification code of the product's RFID tag 152 in the table after the payment; the purchase group 153, created at the moment of departure; the unique code of the MST RFID tag 152 in the table on departure; the purchase ID 155 in the table on departure; the identification code of the RFID tag 156 in the table on departure;

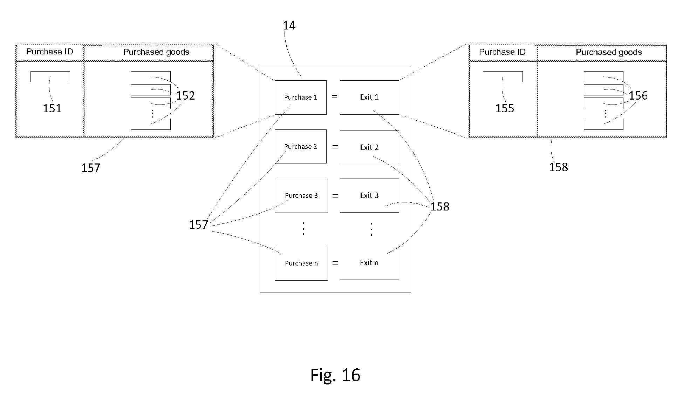

Fig. 16 shows the parts, which are not shown in Fig.Fig. 1-15: the purchase group 157, created after making a payment without the MST; purchase group 158 created on departure without the MST;

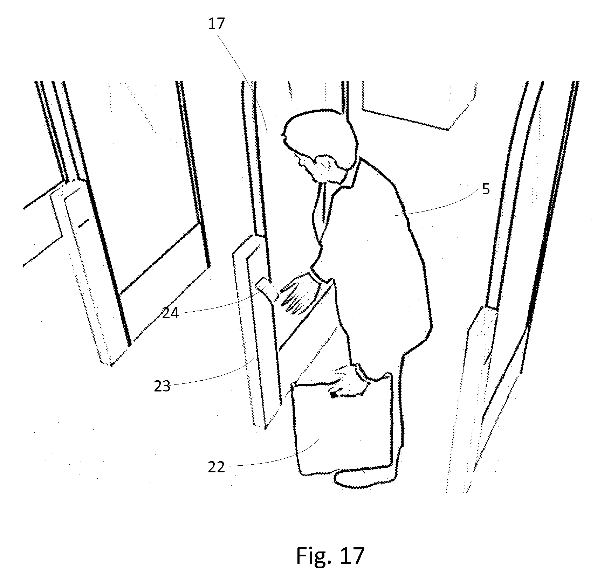

Fig. 17 shows the parts, which are not shown in Fig.Fig. 1-16: shopping basket 22;

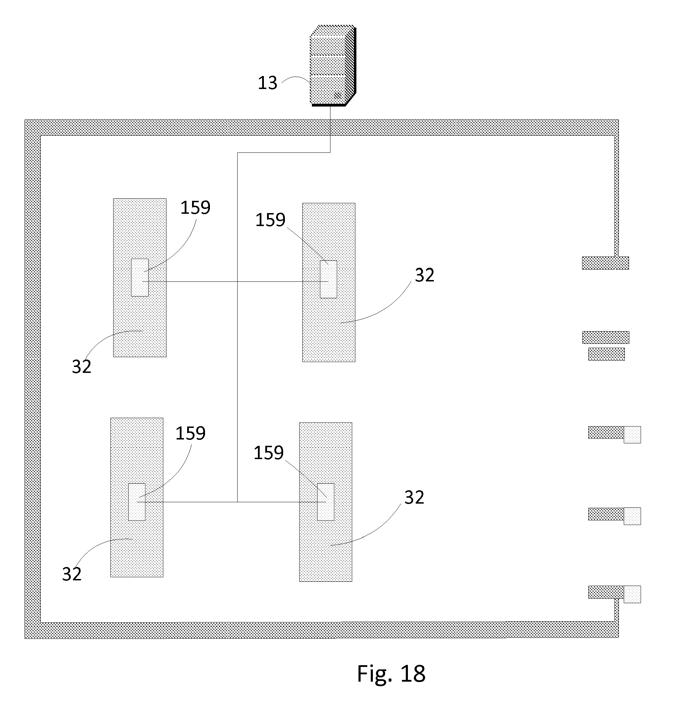

Fig. 18 shows the parts, which are not shown in Fig.Fig. 1-17: RFID readers installed on shelves 159;

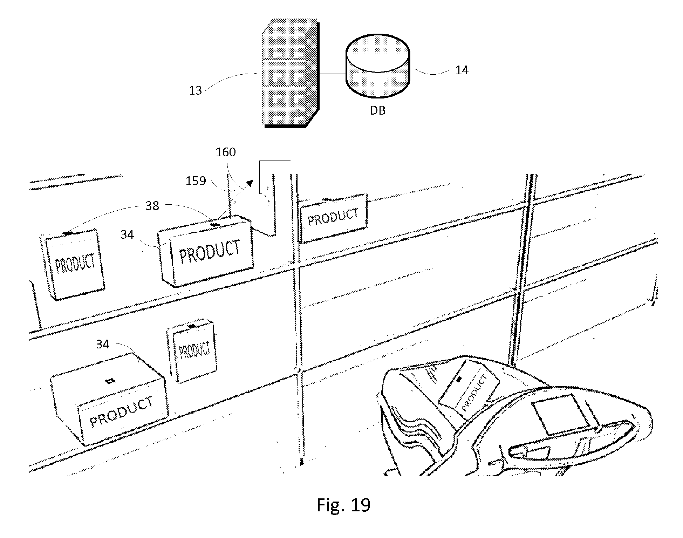

Fig. 19 shows the parts, which are not shown in Fig.Fig. 1-18: Reading information from RFID tag 160;

### The description of operation of the self-service shopping system

The presented invention relates to the shopping system, where there is a typical shopping center 1, where there are retail premises 2 of the store (fig. 1). There a customer using a shopping cart (MST) 6, wirelessly connected with the main server 13, purchases goods at any time, anywhere on the retail floor 2. After paying for the goods using the mobile self-service terminal 6, simply leaves the retail floor through the security gates 17, thus without creating any waiting queues. Also, there may be customers, who make a payment in cash or who make purchases using shopping baskets. Therefore, all the customers are divided into three groups.

In the commercial premises 2 there are wireless access points 3 (Fig. 1). The wireless network covers all retail premises 2 and part of the territory behind the exit from the retail premises 4. The retail space has one or several entrance points 28 and the number of exits 19, selected based on the size of the retail space 12. The customer 5 with the MST 6 or the shopping basket 8 enters through the entrance 28. And after completing the purchase of when he does not buy anything, leaves the retail premises 2 through the exit 19. The database 14, which contains all the information required for the purchase, is in the server 13. The server 13 is connected to the Internet in order to conduct the payment transactions from MST 6 and SST 16. Also, the security staff computers 29 are connected to the main server using wired connection, from which they receive a signal from, on an attempt to carry goods through the exit 19 without paying for them. The charging unit 20 is connected using wired connection to the main server 13, in order to capture the information about the charging MST 6. The shopping baskets 8 are kept near the entrance to the retail premises 21. The security gates 17, which register the goods that leave the retail premises 2, are connected to the server 13. The receipt issuing devices 23, which print the receipt when the customer leaves through the exit 19 with the MST with the purchased goods, are connected to the main server 13 using wired connection.

The wireless access is for customers 5, who make purchases with MST 6. MST 6 is for the first 9 and the second 10 customer groups (fig. 2). The first customer group 9 - are the customers 5, who use MST 6, and pay for the goods anywhere on the retail floor 2 by using chip or magnetic payment cards 7 (fig. 2). On the retail floor 2 there are also stationary self-service terminals (SST) 16, which are connected to the main server 13, using wired connection (Fig. 1). SST 16 is for the second 10 and the third 11 customer groups (fig. 2). The second customer group 10 - are the buyers 5, who use MST and pay for the goods in cash 12 at the stationary self-service terminal (SST) 16. The third customer group 11 - are the buyers 5, who use shopping baskets 8 and pay for the goods in cash 12 or with payment cards 7 at the stationary self-service terminal (SST) 16.

The first customer group 9 (fig. 2), after loading the goods from the shelves 32 of the retail premises 2 (fig. 3) into the MST 6 and after making a decision to buy them inserts the payment card 7 into MST 6 and carries out the payment transaction. Wirelessly the payment data is sent to the server 13, from which the data is sent to the bank via the Internet 15. After confirming the payment, the data from the server 13 are wirelessly sent back to the MST 6 and the customer 5 can see the confirmation on the screen telling that the payment was successful. Then the customer 5 may leave the retail floor 2 through the security gate 17 (Fig. 1). Then the customer 5 unloads the goods from MST 6 and takes them with him, while the MST 6 gets parked next to the charging device 20 or another MST 6 connected to the charging unit 20.

The second customer group 10 (fig. 2) after loading the goods from the shelves 32 on the retail floor 2 into MST 6 and having decided that he wants to buy them, goes with the goods to SST 16, parks the MST next to SST 16, in a special dedicated space 52, and, without unloading the goods, pays them in cash using SST 16 (fig. 4). Then the customer 5 may leave the retail floor 2 through the security gate 17 (Fig. 1). Then the customer 5 unloads the goods from MST 6 and takes them with him, while the MST 6 gets parked next to the charging device 20 or another MST 6 connected to the charging unit 20.

The third customer group 11 (fig. 2) loads the goods from the shelves 32 on the retail floor 2 into a shopping basket 8 and having decided that he wants to buy them, goes with the goods to SST 16, places the shopping basket 8 on SST 16 on a special dedicated place 58, and, without unloading the goods, pays for them in cash 12 or a payment card using the SST 16 (fig. 5). Then the customer 5 may leave the showroom 2 through the security gate 17 (Fig. Then the customer 5 unloads the goods from the shopping basket 8 and takes them with him, while the shopping basket 8 gets placed in a special dedicated place 21.

Built-in RFID reader 27, at the gate 17, next to the exit 19 from the retail floor 2, are connected to the main server 13 using wired connection (Fig. 3). When the customer 5 with MST 6, or the customer 5 with the shopping basket 8 or the basket 22 passes through the security gate 17, the RFID reader 27 once again scans 33, 62 transported goods (fig. 3, fig. 5) thus ensuring additional security. The security alarm will not be activated, if through the gate 17 the customer 5 carries only the items for which he has paid. If the customer 5 carries through the five gate unpaid goods, that triggers sound alarm 26, as well as the signal is sent to the server 13 notifying that the unpaid goods are transported through the gate. From the server 13 the signal is sent to the security staff computers 29, which are located at the premises of the security staff 25.

The devices 23, that issue purchase receipts 24, are connected with the main server 13 using wired connection (Fig. 3). Receipts 24 issued for all customer groups, the first 9, the second 10, and the third 11, at the moment when they pass through the security gate 17 with the purchased goods. If the customer passes through the gate 17 without carrying any goods, the purchase receipt 24 will not be issued.

Figure 3 shows the shopping process of the first customer group. The customer 5 starts the shopping process at the moment when he together with the MST 6 passes through the entrance 28 into the retail floor 2. At the entrance 28 the automatic entrance gates 46 open, while the RFID readers installed in the security gate 18, when MST 6 passes through the gates 18, scan 45 its active RFID tag 30, which also emits a signal 47. After scanning this tag 30, a signal is given to activate the MST 6 devices and at the same time the scanned RFID tag data 30 is sent to the server 13, using wired connection. The unique MST 6 code and the information from RFID tag about the readiness of all the devices to operate gets recorded in the database 14 on the server 13. If the devices are ready for operation, the server 13 via a wireless network 49 sends a signal 48 back to the MST 6, allowing to initiate the shopping process. The customer 5 sees the on screen 36 message allowing him to start placing the goods he wants to buy goods into the MST 6.

The customer 5 goes 43 with the MST 6 to the shelves 32, where the goods are laid out 34. The customer 5 loads the goods 34 into the MST 6. It is equipped with RFID reader 35, linked to the MST 6 computer 63, which automatically scans 37 the RFID tag 38 attached to the product 34. The identification code 152 of the scanned RFID tag 38 (fig. 15) gets sent to the main server 13 via the wireless link 39 (fig. 3), while another part of the information gets immediately displayed on the LCD screen 36 of the MST. The server 13 according to the identification code 152 in the database 14 selects the price of the product and sends it back wirelessly 40 to the MST 6 computer 63, where it is displayed on the LCD screen 36. The information on RFID tag 38 - that is the product's 34 weight, "best before" date, volume, composition, etc.. This way all the goods 34 placed into the MST 6 are scanned. From the time when the first product 34 is loaded on MST 6, the customer 5 sees the message with a proposal to pay displayed on the LCD screen 36. On the touch sensitive LCD screen 36, all product 34 data are shown, including the total price of the products 34. The customer 5, who decided to pay for the goods 34, clicks a button "TO PAY" on the touch-sensitive LCD screen 36, chooses the payment method "PAY WITH THE CARD", inserts the payment card 7 into a magnetic 41 and smart card 42 reader in the MST 6, and anywhere on the retail floor 2, for instance standing next to the shelves 32 displaying the goods 34, by using the LCD touch screen 36 performs the payment transaction. During the payment operation, the data about the money transfer travels 39 from the MST 6 computer 63 to the server 13 via the wireless link 49. From there, via Internet 15 the data is sent to the bank. After the bank approves the payment, the information on the successful execution of a transaction is sent back to the server 13. From there, it is sent via the wireless connection 49 back 40 to the MST 6 computer 63, where on the LCD screen 36 the customer 5 sees a message of approval on the successfully executed payment transaction. At that time, in the database 14, the server 13 stores the RFID tag 38 identification codes 152 of the paid goods 34 as well as the unique code 150 of the MST 6 (Fig. 15). Based on those the check is performed, the MST 6 together with the products 34 leaves through the exit 19 gates 17.

Then the customer 5 goes 44 with the MST 6 through the exit 19 from the retail floor 2. The RFID reader 27, present at the gates 17, captures 33 the signal 31 emitted by the RFID tag 30 and the RFID tags 38 of the goods 34 that are transported. From the gates 17, via the wired connection, this information is sent to the server 13. In the database 14 the identification codes 154 and 156 of the RFID tags 38 of the goods 34 and RFID tag of the MST 6 are checked against the codes 150 and 152 (fig. 15), which were recorded in the database 14 after the payment has been made. This ensures additional security, in case the customer 5 is trying to transport the goods 34, for which payment has not been made, away from the retail floor 2 using the MST 6 (fig. 3). If through the gate 17 the MST 6 transports the goods 34 for which payment has not been made, then the data from the server 13 is sent to the computers 29 of the security staff. The security staff can see which MST 6, through which gates 17, transports what kind of goods 34. The sound alarm 26 gets triggered. If there no violations observed when comparing the identification codes of the RFID tags 38 and the RFID tags 30 in the database 14, then the information is sent over the wired link from the server 13 to the device 23, which prints the purchase receipts 24. The device 23 prints a receipt 24 based on the purchased goods 34, which the customer 5 takes out from the retail floor 2 in the MST 6. The customer 5 takes the receipt 24. At the time the purchase receipt 24 gets printed, the signal is sent via the wireless link from the server 13 to the MST 6 computer 63 to turn off the devices on MST 6. MST 6 completes the operation. The customer 5 is free to unload the goods 34.

Figure 4 shows the purchasing process of the second customer group. The customer 5 starts the shopping process at the moment when he together with the MST 6 passes through the entrance 28 into the retail floor 2. At the entrance 28 the automatic entrance gates 46 open, while the RFID readers installed in the security gate 18, when MST 6 passes through the gates 18, scan 45 its active RFID tag 30, which also emits a signal 47. After scanning this tag 30, a signal is given to activate the MST 6 devices and at the same time the scanned RFID tag data 30 is sent to the server 13, using wired connection. The unique MST 6 code and the information from RFID tag about the readiness of all the devices to operate get recorded in the database 14 on the server 13. If the devices are ready for operation, the server 13 via a wireless network 49 sends a signal 48 back to the MST 6, which allows initiating the shopping process. The customer 5 sees the on screen 36 message allowing him to start placing the goods he wants to buy goods into the MST 6.

The customer 5 goes 43 with the MST 6 to the shelves 32, where the goods are laid out 34. The customer 5 loads the goods 34 into the MST 6. It is equipped with RFID reader 35, linked to the MST 6 computer 63, which automatically scans 37 the RFID tag 38 attached to the product 34. The identification code 152 of the scanned RFID tag 38 (fig. 15) gets sent to the main server 13 via the wireless link 39 (fig. 4), while the other part of the information gets immediately displayed on the MST LCD display 36. The server 13 according to the identification code 152 in the database 14 selects the price of the product and sends it back wirelessly 40 to the MST 6 computer 63, where it is displayed on the LCD screen 36. The information on RFID tag 38 - that is the product's 34 weight, "best before" date, volume, composition, etc.. This way all the goods 34 placed into the MST 6 are scanned. From the time when the first product 34 is loaded on MST 6, the customer 5 sees the message with a proposal to pay displayed on the LCD screen 36. On the touch sensitive LCD screen 36, all product 34 data are shown, including the total price of the products 34. The customer 5, who decided to pay for the goods 34, clicks a button "TO PAY" on the touch-sensitive LCD screen 36, chooses the payment method "PAY WITH CASH", (however he can choose to pay with the card). Then the customer 5 goes 51 with the MST 6 to the self-service terminal (SST) 16, where he can make the payment in cash 12 for the goods 34. MST 6 gets parked next to the SST 16 in a special dedicated place 52. Then the RFID scanner 53 scans the unique code 150 of a RFID tag 30 (fig. 15) and sends 56 the data through the SST 16 to the server 13 (fig. 4). The unique identifier 150 of the RFID tag 30 of the MST 6 gets checked in the database 14. For additional security the SST 16 is provided with the security gate 55 with a built-in RFID reader 82. Thus the goods 34, for which the payment is underway, are additionally scanned. Based on the code 150, the data about the goods 34 present in the MST 6, are sent via wired connection from the server 13 to the SST 16. On the LCD screen 54 of the SST 16, all product 34 data are shown, including the total price of the products 34. The customer 5, who decided to pay for the goods 34, clicks a button "TO PAY" on the touch-sensitive LCD screen 54, inserts cash 12 into the device 61 of the SST 16 for receiving cash (fig. 9). After completing the payment, from the SST 16 computer 81 (Fig. 8), the payment data travels via the wired connection to the server 13 (Fig. 4). If the payment is completed successfully, the server 13 sends the information about the successfully execute operation back to the SST 16 computer. The customer 5 sees the approval message confirming the successfully completed operation on the LCD screen 54. At that time, in the database 14, the server 13 stores the RFID tag 38 identification codes 152 of the paid goods 34 as well as the unique code 150 of the MST 6. Based on those the check is performed, the MST 6 together with the products 34 leaves through the exit 19 gates 17.

Then the customer 5 goes 44 with the MST 6 through the exit 19 from the retail floor 2. The RFID reader 27, present at the gates 17, captures 33 the signal 31 emitted by the RFID tag 30 and the RFID tags 38 of the goods 34 that are transported. From the gates 17, via the wired connection, this information is sent to the server 13. In the database 14 the identification codes 154 and 156 of the RFID tags 38 of the goods 34 and RFID tag of the MST 6 are checked against the codes 150 and 152 (fig. 15), which were recorded in the database 14 after the payment has been made. This ensures additional security, in case the customer 5 is trying to transport the goods 34, for which payment has not been made, away from the retail floor 2 using the MST 6 (fig. 4). If through the gate 17 the MST 6 transports the goods 34 for which payment has not been made, then the data from the server 13 is sent to the computers 29 of the security staff. The security staff can see which MST 6, through which gates 17, transports what kind of goods 34. The sound alarm 26 gets triggered. If there no violations observed when comparing the identification codes of the RFID tags 38 and the RFID tags 30 in the database 14, then the information is sent over the wired link from the server 13 to the device 23, which prints the purchase receipts 24. The device 23 prints a receipt 24 based on the purchased goods 34, which the customer 5 takes out from the retail floor 2 in the MST 6. The customer 5 takes the receipt 24. At the time the purchase receipt 24 gets printed, the signal is sent via the wireless link from the server 13 to the MST 6 computer 63 to turn off the devices on MST 6. MST 6 completes the operation. The customer 5 is free to unload the goods 34.

Figure 5 shows the purchasing process of the third customer group. The customer 5 starts the purchasing process at the moment when he together with the shopping basket 8 passes through the entrance 28 into the showroom 2. At the entrance 28 opens the automatic gate 46.

The customer 5 goes 43 with the shopping basket 8 to the shelves 32, where the goods 34 are laid out. The customer 5 loads the goods 34 into the shopping basket 8.

Then the customer 5 goes 51 with the shopping basket 8 to the SST 16, where he can make the payment in cash 12 or with the payment card 7 for the goods 34. Puts the shopping basket 8 with the goods 34 on the special dedicated place 58 on the SST 16. Then the RFID reader 53 scans the RFID tags 59 from the products 38. The scanned identification code of the RFID tag 38 is sent 60 via the wired link from the SST 16 to the main server 13. Based on that, the server 13 returns via the wired link the price of the product back to the computer 81 of the SST 16, and displays it on the LCD screen 54. Other information from the scanned RFID tag 38 - are the details about the product 34, which has and RFID tag 38 attached to it. The information may be the product's weight, "best before" date, volume, composition, etc.. After scanning the RFID tag 38, it is immediately shown on the LCD display 54. This way all the goods 34 placed onto the SST 16 are scanned. The customer 5, who decided to pay for the goods 34, clicks a button "TO PAY" on the touch-sensitive LCD screen 54, chooses the payment method "PAY WITH CASH" or "PAY WITH CARD". The customer 5 puts cash 12 into the cash-accepting device 61 on the SST 16. Or inserts the payment card 7 into the SST 16. After completing the payment, from the SST 16 computer 81, the data about the payment travels to the server 13. If the payment is completed successfully, the server 13 sends the information about the successfully executed operation back to the SST 16 computer. The customer 5 sees the approval message confirming the successfully completed operation on the LCD screen 54. At that time, in the database 14, the server 13 stores the RFID tag 38 identification codes 152 of the paid goods 34 and based on them and on the purchase ID 151 it creates the group of the paid and bought goods 34 (fig. 16). Based on those the check is performed, when the customer 5 together with the goods 34 leaves through the exit 19 gates 17 (fig. 5).

The customer 5 with the shopping basket 8 goes 44 through the exit 19 out from the showroom 2. The RFID reader present on the gate 17 registers 62 the RFID tags of the transported goods 34. From the gates 17, the identification code 156 of the RFID tag is sent via the wired connection to the server 13. In the database 14 the identification codes 156 of the RFID tags 38 of the goods 34 and are compared with the purchase ID 151, based on that the payment receipt 24 is issued (fig. 16). If through the gate 17 the goods 34 are carried for which payment has not been made, then the data from the server 13 is sent to the computers 29 of the security staff. The security staff can see which goods 34 are carried through which gates 17 (fig. 5). The sound alarm 26 gets triggered. If there are no violations observed when comparing the identification codes 152 and 156 of the RFID tags 38 of the goods 34 with the purchase ID 151 and 155(fig. 16), then the information is sent over the wired link from the server 13 to the device 23, which prints the purchase receipts 24 (fig. 5). The device 23 prints a receipt 24 for the purchased goods 34, which the customer 5 takes out from the retail floor 2. The shopping process is completed, when the customer 5 takes the receipt 24.

Figure 6 shows the flow diagram for the MST. It shows the main elements of this terminal. The Mobile Self Service Terminal (MST) - is a computerized shopping cart 6, with a built-in computer 63, with an integrated RFID reader-recorder 64, an active readable-recordable RFID tag 30, a liquid crystal touch sensitive display 36, audio speakers 67, RFID reader 35, smart payment card reader 42, magnetic payment card reader 41, scales 66 and batteries 65. The MST 6 described in the invention, is dedicated for store customers 5 purchasing goods, using payment cards 7 or cash 12. When shopping using payment cards 7 with this MST 6, the waiting queues do not form on the retail floor 2 (fig. 1). Because the customer 5, after loading the goods 34 to the MST 6, can pay for them immediately and leave the retail floor 2 without stopping anywhere. On the MST display 36 the customer 5 sees all the necessary information required to make the purchase: the price of goods loaded to MST, the total price, information about the goods, discount. Also, with it it is possible to make the search of goods 34 on the retail floor 2. On finding the product 34, the display 36 shows its price, description, its place on the retail floor 2, the number of remaining items, the discount and so on.. The customer 5 manages the shopping process using the touch-sensitive LCD screen 36. The customer through it performs searching for the goods 34, performs the payment with the card 7, or chooses to pay in cash 12. Over the loudspeakers, the customer hears the shopping guide, which facilitates payment transaction. The LCD screen 36 can also display advertisements. If the screen 36 remains untouched for a certain period of time, the promotional video clip starts. After touching the screen 36, the promotional video stops and it displays the information about the goods in the MST 6, and optionally about the products on the retail floor.

Figure 7 shows the MST 6. The scales 66 are located at the bottom 68 of the MST basket. The scales 66 are attached to a special folding fitting. When the MST 6 is slid into another MST 6, the folding fitting with the scales 66 are lowered to the bottom. This way a vacant space is created for another MST 6 to be pushed in. A monitor 36 is integrated in the upper case 75 in the front of the MST. Just to make it convenient for the customer to reach. The monitor 36 is tilted at an angle of 30 degrees, therefore it has a convenient viewing angle for the customer standing in front of the MST. There is a computer installed in the case 73. The upper case 75 has integrated magnetic 41 and smart 42 card readers, an active RFID tag 30 and RFID reader-recorder 64. The RFID reader-recorder 64 is for reading the information form the active RFID tag 30. The Active RFID tag 30 is for communication between the MST 6 and other devices: security gate 17, SST 16. In order to ensure the stability of the MST 6, it has pretty big fixed wheels 74 fitted at the rear. MST handle 87 is integral with its frontal case 75. It is connected with the upper frontal case 78. The curved lower case 72 is coupled with the rear case 70 and with the curved side case 73. The MST 6 maneuvers with the rotating front wheels 71. The protective rubber band 69, surrounding the shopping basket 68, is for cushioning the MST from impact, when two MSTs collide with each other, or in case MST hits the wall. The MST 6 has a battery 65 fitted under the rear case 70. On the outside of the rear case 70, there is a charging socket 80, and on the inside of the rear case 70 there is a charging plug 86. When the MST 6 is slid into another MST 6, it is charging and at the same time it transfers the electric current to the other MST 6. At the rear of the MST basket 68, there is a RFID reader 35 mounted for indicating the goods. When a product is loaded into the MST 6 basket 68, the RFID reader 35 immediately indicates its RFID tag. In the front part of the MST there is an opening basket 68 wall 79. There are openings for legs, made for a child seat. On the wall 79 of the basket, there is a folding chair attached for children 77. Over the loudspeakers 69, the customer hears the shopping guide, which facilitates payment transaction.

Figure 8 shows the block diagram for the SST. The stationary self service terminal (SST) - is a computerized stationary self-service device 16, with the integrated computer 81, RFID reader-writer 53, a liquid crystal touch sensitive display 54, audio speakers 83, RFID reader 82, smart payment card reader 84, magnetic payment card reader 85, and a device 61 for receiving and issuing cash. The SST 16 described in the invention, is dedicated for store customers 5 purchasing goods, using MST 6 or shopping basket 8, and making payments in cash 12 or using payment cards 7 (fig. 2). This SST is used by the customers, who use shopping baskets 8 or MST 6 and pay in cash 12. The SST 16 is made software compatible with the MST 6. The RFID reader-writer 53 is for indicating the goods in the shopping basket 8 and for reading the MST RFID tag information. The RFID reader 82, which is at the place 52 for entering with MST 6, once again re-scans the contents of the MST 6 shopping basket. The customer 5 performs all the operations necessary for making purchases on the touch sensitive LCD screen 54. Over the loudspeakers 83, the customer hears the shopping guide, which facilitates payment transaction.

Figure 9 shows the conceptual SST 6 model. The SST 16 is composed of two main elements: the security gate 55 and the base unit 88, equipped with a computer 81 (fig. 8), RFID reader-writer 53, a liquid crystal touch sensitive display 54, audio speakers 83, smart payment card reader 84, magnetic payment card reader 85, and a device 61 for receiving and issuing cash. Between the security gate 55 and the base unit 88, there is the special space for the MST entrance 52. When MST 6 enters into the special dedicated place 52, the RFID reader-writer 53 scans the RFID tag 30 of the MST 6. Based on that, it identifies the goods present in the MST 6. Then the screen 54 of the SST 16 automatically shows the same information as the one that appears on the screen 36 of MST 6. Then the customer 5 comes next to the SST 16, and there makes a payment for the goods, that are inside the MST 6. The customer 5, using a shopping basket 8, puts the basket on the SST 16 in a special place 58, then the RFID reader-writer 53 indicates the goods that are in the basket 8 and displays the information about them on the screen 54. Then makes a payment. SST 16 is handled using the touch-sensitive LCD screen 54. In order to cancel the item from the list of items, it is enough to just remove it from the basket 8, placed on the special spot 58 on the SST 16.

Figure 10 shows the diagram of the flow of the shopping process. The shopping process starts 89 when the customer chooses 90 the means, with which he will do the shopping. If he does not chooses MST, and then the customer is assigned to the third customer group (fig. 2). If he chooses the MST, first it gets disconnected from the charging device 91. Then, he enters the showroom 92 through the gate. Passing through the gate, the MST sends information about the devices to the server 13. If the devices are ready for operation 93, the server 13 sends a command to activate the MST devices 94. Then the MST gets activated 95, and the customer can start loading it with goods. The customer loads the goods to the MST 96, the RFID reader scans the RFID tags of the goods 97. When goods are loaded to the MST, the screen 36 displays the query message "Make a Payment? " 98. The customer chooses whether to pay for the goods now or not yet. If he decides to pay, he chooses the method of payment for the goods 100. If the choice is made to pay using the payment card, then the customer gets assigned to the first customer group (fig. 2). If the customer decides not to pay for goods 99, then he unloads the goods from the MST, puts them back on the shelves and leaves the retail floor 103. Otherwise, he continues loading the goods into the MST and later pays for them. If the customer chooses to pay in cash 101, then he is assigned to the second customer group (fig. 2). If no payment selected, the customer removes the goods from the MST 102 and goes to the exit.

Figure 11 shows the flow of the shopping process of the first customer group.

If the customer makes a choice to pay using a card, he inserts the payment card 147 into the MST and performs the payment. If the payment is successful 104, the purchase ID gets recorded in the database and assigned with the unique RFID tag code of the MST 105. Then the payment confirmation is sent from the server to the MST 106. The customer after successfully completing the payment goes through the exit gate. In case of payment failure, the warning about the payment error is sent from the server to the MST 107. Then the shopping process gets suspended, with help of a special button the assistance is called and the problem is being solved 108.

Figure 12 shows the flow of the shopping process of the second customer group up till the exit through the gate. The customer selects the method of payment to pay in cash, and goes 109 to SST. Pushes 110 the MST next to the SST. The identification of MST is performed 111. After identifying the MST, the list of the goods 112, present in the MST, is displayed on the monitor 54 of the SST. If the customer decides to make the payment 113, he inserts cash into the SST 114. If the payment is successful 115, the purchase ID gets recorded in the database and assigned with the unique RFID tag code of the MST 119. Then the payment confirmation is sent from the server to the MST 120. After successfully completing the payment, the customer goes through the exit gate. In case of payment failure, the warning about the error that occurred during the payment is sent from the server to the SST 116. Then the shopping process gets suspended, with help of a special button the assistance is called and the problem is being solved 117. If the customer decides not to pay for goods, then he unloads the goods from the MST, puts them back on the shelves and leaves the retail floor 118.

Figure 13 shows the flow of the shopping process of the third customer group up till the exit through the gate. The customer loads the goods from the shelves into the shopping basket 121, goes to the SST 122 and places the basket on a special dedicated spot 123. The SST identifies the RFID tags present on the products 124. The SST monitor displays the information about the goods 125. Also the screen displays the query message "Proceed with the payment?" 126. The customer chooses whether to pay for the goods or not. If he decides to pay, he inserts cash or a payment card into the SST 127. If the payment is successful 128, the purchase ID gets recorded in the database 132. Then the payment confirmation is sent from the server to the SST 133. After successfully completing the payment, the customer goes through the exit gate. In case of payment failure, the warning about the error that occurred during the payment is sent from the server to the SST 129. Then the shopping process gets suspended, with the help of a special button the assistance is called and the problem is being solved 130. If the customer decides not to pay for goods, then he unloads the goods from the shopping basket, puts them back on the shelves and leaves the showroom 131.

Figure 14 shows the exit through the gate for all three customer groups. The customer passes through the gates 134 with the purchased goods or without the goods. The RFID reader present in the gates searches for the signal emitted by the MST RFID tag 135. If it identifies the tag, that means the customer goes with the MST. If the signal from the RFID tag is not received, that means the customer transports the goods in a shopping basket or without it. When the MST records the RFID tag, its information is sent from the RFID reader present in the gates to the server 136. Then it scans the RFID tags present on the goods 137. This scan is repetitive to make sure that there are no transported goods for which the payment has not been done. Based on the MST tag, the purchase ID is found on the server and the purchased goods are compared with the ones being transported 138. If the transported goods match the ones that have been purchased 139, the purchase receipt 140 is issued based on the purchase ID, and the shopping process is completed 148. If the transported goods do not match the list of purchased goods, the signal gets sent to the security computers 145. There the security staff can see all the information about the goods that are being transported through the gates and carry out the inspection of the goods 162. If the customer goes through the gate with the shopping basket or without it, at the gate scanned products 141 are compared with the goods recorded to the database after the payment 142. If the transported goods match the ones with the purchase ID after the payment transaction 143, the purchase receipt 140 is issued based on the purchase ID, and the shopping process is completed 148. If the transported goods do not match, the signal gets sent to the security staff computers 144. The security officers carry out the inspection 161, in the computers they can see, which goods do not match the purchase.

After the payment with the MST or SST, the purchase ID 151 gets saved in the database, the unique codes of the goods are assigned to the purchase ID 152 (Fig. 15). If the customer bought the goods using the MST, in addition to the purchase ID 151, the unique code 150 of the RFID tag 30 will be recorded in the database 14. This way the purchase group 149 gets created in the database 14. The number of purchases that occur during the day in the store, as many purchase groups 149 will be created in the database. When the customer 5 with MST 6 passes through the exit gate 17, the RFID reader 27 scans the RFID tag 30 and the goods that are present in the MST 6 (fig. 3, fig. 4). The scanned code 154 of the RFID tag 30 and the scanned codes 156 of the goods are assigned to the same purchase ID 154 (fig. 15). Then the same data table 153 of leaving from the showroom is created in the database 14. The exit from the showroom 2 is considered successful, when the data in the table 149 and the table 153 are identical. The codes for the goods, purchase ID and the code of the RFID tag 30 must be identical in both data tables. 150 = 154, 151 = 155, 152 = 156. Otherwise, the MST is stopped at the exit gate 17, and the purchase receipt is not issued.

After making the payment using the SST and the shopping basket 8, the purchase ID 151, which has the unique codes of the purchased goods assigned, gets saved in the database 14 (fig. 16). This way the purchase group 149 gets created in the database 14. Same as the number of purchases that occur during the day in the store, as many purchase groups 157 will be created in the database 14. When the customer 5 with the shopping basket 8 passes through the exit 19 gates 17, the RFID reader 27 scans the goods that are present in the shopping basket 8 (fig. 5). The scanned product codes 156 are assigned to the same purchase ID 155. Then the same data table 158 of leaving from the showroom is created in the database 14. The exit from the showroom 2 is considered successful, when the data in the table 157 and the table 158 are identical. The codes for the goods and the purchase ID must be identical in both data tables, 151 = 155, 152 = 156. Otherwise, the sound alarm is activated and the message is sent to the computers of the security staff. The purchase receipt does not get issued.

The customer, who has paid for the goods 34, can exit through the gate with a shopping basket 8, with a shopping cart 22 or to carry the purchases in his hands (fig. 17). If only the purchased goods are carried through the gate, the printing machine 23 issues a receipt 24.

The customer 5 picks it up and leaves the showroom. The receipt is not issued, in case a mistake occurs, or if the goods that have not been paid for are transported through the gates.

The store may be equipped with the real-time turnover tracking system. This system comprises RFID readers 159, which are present on the shelves 32 and are connected to the main server 13. They track the quantity of the goods present on all shelves 32 (fig. 18).

The RFID scanner 159 present on the shelves 32 scans the RFID tags 38 of the goods 34 and sends 160 the information to the server 13. After the product 34 is removed from the shelves 32, the radio signal 160 between the RFID tag 38 and the RFID reader 159 gets interrupted (fig. 19). The server 13 shows that the product 34 has been removed from the shelves 32. In this way the real-time goods turnover can be tracked on the retail floor. The server shows how many products are on shelves 32 and at the same time within the entire store. Knowing what products have been purchased and what goods are still on the shelves, the comparison of the number of goods taken from the shelves and the sold goods is performed in real-time in the database 14. That way it is tracked whether all the goods that were removed from the shelf were actually purchased, and what is the number of thefts.

## Claims

1. Self-service shopping system, comprises a main server (13), coupled with data bases (14), which contain information about the goods; at least one cart (6) for the goods, in which are arranged the equipment such as:
- a computer (63) with a monitor and its control device, comprising a communication link with the main server (13),
- RFID reader (35), comprising a communication link with the said computer and the main server (13), for scanning the information about the goods loaded on the cart, based on their RFID tags, and to show this information on the monitor,
- magnetic and/or smart card reader (41, 42) to read customer loyalty cards;
a stationary self-service terminal with a payment device (16), comprising a communication link with the main server (13); at least one entrance gate and at least one exit gate, **characterised in that** the said magnetic and/or smart card reader (41, 42), which is arranged in the the cart (6), is designed and adapted to read payment cards, and has a mutual communications link through the cart's computer (63) with the main server (13), which is connected to the Internet in order to be able to carry out payment transactions in a shopping cart, and each cart is fitted with an individual RFID tag (30); the entrance gate (18) has an RFID reader to read cart's RFID tag, which is linked with a bidirectional communication link with the server (13), so that it activates the cart based on the cart's RFID tag (30); the stationary self-service terminal (16) comprises a device for paying in cash, has a communication link with the equipment installed in a shopping cart, and has a RFID reader and a special place (52) to park a shopping cart (6), where the cart's RFID tag gets read and the payment in cash is carried out, without removing the goods from the cart; the exit gate (17) is equipped with control unit containing a RFID scanner, which scans the cart's RFID code and the RFID codes from the products present in the cart, and via the mutual communication link with server (13), performs the comparison of the prices of all the goods present in the cart with the paid amount, and displays the result of the comparison on the display.

2. System according to claim 1, **characterised in that** the above mentioned communication link used with the server (13) is wireless link.

3. Cart for self-service shopping system according to claims 1-2, comprising a computer with the monitor and its control unit, RFID reader for scanning the information about the goods placed in the shopping cart, based on the RFID tags attached to the goods, and for showing the information on a computer (63) monitor, magnetic and/or smart card reader (41, 42) to read customer loyalty cards, **characterised in that** it is provided with RFID tag for cart identification, while the magnetic and/or smart card reader (41, 42) designed and adapted additionally to read the payment cards and to carry out payment transactions in a shopping cart.

4. Cart according to claim 3, **characterised in that** the computer monitor is a touch-sensitive LCD screen, mounted in front of the cart, better on its handle, in a convenient for the customer location.

5. Cart according to any one of claims 3-4, **characterised in that** the cart (6) has an integrated electronic scales with the communication link to the said computer (63).

6. Cart according to any one of claims 3-5, **characterised in that** the information about the goods loaded into the cart is read based on their RFID codes is associated with the weight of those goods, quantity, expiry date, volume, composition, price, the total price of all the loaded goods, etc.

7. Shopping method using the self service shopping system according to any one of claims 1-2 and the cart according to any one of claims 3-6, **characterised in that** it comprises the following steps:
- the customer activates the computerized shopping cart (6) based on its RFID code at the entrance gate (18) via the communication link with the server (13),
- the customer loads the goods with RFID tags into the shopping cart;
- the RFID reader (35) present in the cart automatically scans the RFID tags from the goods placed into the cart, and the LCD touch screen of the computer (63) shows the information about the goods and their price, and also sends this information via the communication link to the main server (13);
- after all the desired goods are loaded into the cart, the customer with the help of the LCD touch screen selects the method of payment by card or in cash and, according to the selected method of payment, performs the payment accordingly in the cart (6), by inserting a payment card into the magnetic or smart card reader (41, 42) present on the cart, or goes to the special place (52) of the stationary self-service terminal (16) and carries out the payment in cash,
- further the customer goes into the control exit gate (17), where the RFID reader scans the cart's RFID code and once again scans the RFID codes of the goods present in the cart, while using the bidirectional communication link with the server (13) makes the comparison of the paid amount and the total price of the goods present in the cart, and displays the results of the comparison on the monitor.
- if the totals under comparison match each other the customer gets the receipt issued by a special device, if the totals do not match the signal is sent to the security staff.
